# EUROPEAN PATENT APPLICATION

(11) **EP 4 414 506 A1**
(43) Date of publication of application: **14.08.2024**
(21) Application number: 22895222.2
(22) Date of filing: 15.09.2022
(51) Int. Cl.: E02F 9/24, E02F 9/26

(54) **MONITORING AREA SETTING SYSTEM**

(30) Priority: 17.11.2021 JP 2021186761
(71) Applicant: KOBELCO CONSTRUCTION MACHINERY CO., LTD., Hiroshima-shi, Hiroshima 731-5161 (JP)
(72) Inventor: KYU, Shingun, Hiroshima-shi, Hiroshima 731-5161 (JP); MUNEMASA, Yoshiki, Hiroshima-shi, Hiroshima 731-5161 (JP); HOSO, Yukihiro, Hiroshima-shi, Hiroshima 731-5161 (JP); DOI, Takayuki, Hiroshima-shi, Hiroshima 731-5161 (JP)
(74) Representative: TBK
(86) International application number: PCT/JP2022/034636
(87) International publication number: WO 2023/089936

(57) **Abstract**

Provided is a monitoring area setting system that can reduce an amount of calculation required for monitoring. A monitoring area setting system (1) includes a point cloud data acquisition unit (3) and a controller (5). The point cloud data acquisition unit has a preset detection range, and acquires point cloud data that is data indicating a distance from a predetermined reference point to a target object within the detection range. The controller acquires information on a reference monitoring area that is an area set to include a work machine located within the detection range, identifies an operation range of the work machine as an excluded area based on the point cloud data, and sets an actual monitoring area for the work machine by excluding the excluded area from the reference monitoring area.

## Description

### Technical Field

The present invention relates to a monitoring area setting system for setting a monitoring area for monitoring intrusion of an object.

### Background Art

As disclosed in Patent Literature 1, it is known to cause a work machine to automatically and repeatedly perform a series of operations from excavation to earth removal.

### Citation List

### Patent Literature

Patent Literature 1: JP H11-293708 A

In a case where a monitoring area for monitoring intrusion of an object is set and the inside of the monitoring area is monitored, it is necessary to monitor each of a work machine working in the monitoring area and an object intruding into the monitoring area, and an amount of calculation required for monitoring is large.

### Summary of Invention

An object of the present invention is to provide a monitoring area setting system that can reduce an amount of calculation required for monitoring.

The present invention provides a monitoring area setting system. The monitoring area setting system includes a point cloud data acquisition unit that has a preset detection range and acquires point cloud data that is data indicating a distance from a predetermined reference point to a target object within the detection range, and a controller that acquires information on a reference monitoring area that is an area set to include a work machine located within the detection range, identifies an operation range of the work machine as an excluded area based on the point cloud data, and excludes the excluded area from the reference monitoring area to set an actual monitoring area for the work machine.

### Brief Description of Drawings

FIG. 1 is a configuration diagram of a monitoring area setting system according to an embodiment of the present invention.
FIG. 2 is a side view of a work machine to which a monitoring area setting system according to the embodiment of the present invention is applied.
FIG. 3 is a circuit diagram of the monitoring area setting system according to the embodiment of the present invention and the work machine.
FIG. 4A is a diagram illustrating point cloud data of the monitoring area setting system according to the embodiment of the present invention.
FIG. 4B is a diagram illustrating point cloud data of the monitoring area setting system according to the embodiment of the present invention.
FIG. 5 is a diagram illustrating an excluded area of the monitoring area setting system according to the embodiment of the present invention.
FIG. 6A is a diagram illustrating a monitoring area and the excluded area for each operation of the work machine.
FIG. 6B is a diagram illustrating the monitoring area and the excluded area for each operation of the work machine.

### Description of Embodiments

Hereinafter, a preferred embodiment of the present invention will be described with reference to the drawings.

### (Configuration of monitoring area setting system)

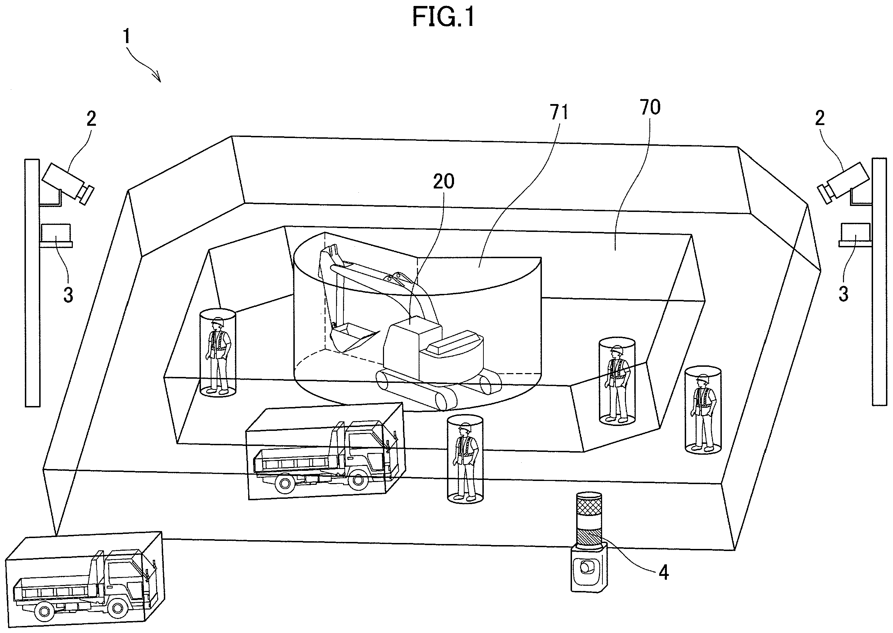

A monitoring area setting system according to the present embodiment sets a monitoring area for monitoring intrusion of an object other than a work machine to be monitored. FIG. 1 is a configuration diagram of a monitoring area setting system 1. The monitoring area setting system 1 includes a camera 2, LiDAR 3, and an alarm device 4.

The camera 2 captures an image of a monitoring area 70 provided at a work site and acquires image information. The camera 2 is provided outside the monitoring area 70, but may be provided in the monitoring area 70. Further, a plurality of the cameras 2 may be provided at a work site.

Here, the monitoring area 70 is set around a work machine 20 arranged at a work site. In the monitoring area 70, the work machine 20 performs work. The work machine 20 may be the work machine 20 on which an operator boards, the work machine 20 that is remotely controlled, or the work machine 20 that is automatically operated.

Light detection and ranging (or laser imaging detection and ranging) (point cloud data acquisition unit) 3 is provided outside the monitoring area 70 together with the camera 2, but may be provided inside the monitoring area 70. LiDAR 3 has a preset detection range, and acquires point cloud data indicating a distance from a position (predetermined reference point) where the LiDAR 3 is attached to an object (the work machine 20 or an intruder) located in the monitoring area 70. In other words, the point cloud data is data indicating a distance from the reference point to a target object within a detection range of the LiDAR 3. Note that a plurality of pieces of the LiDAR 3 may be provided at a work site. Further, as a point cloud data acquisition unit according to the present invention, a stereo camera or a time of flight (TOF) sensor may be used instead of the LiDAR 3.

The alarm device 4 can issue an alarm. Specifically, the alarm device 4 includes a lamp and a speaker, and gives a warning to a worker or the like in a work site by turning on the lamp or generating a warning sound from the speaker.

### (Configuration of work machine)

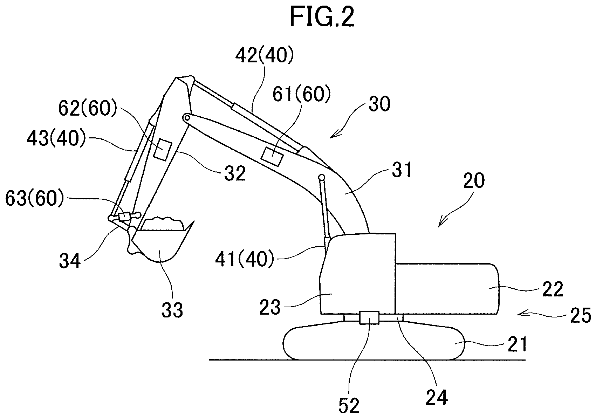

FIG. 2 is a side view of the work machine 20. The work machine 20 is a hydraulic excavator, and includes a machine body 25 including a lower travelling body 21 and an upper slewing body 22, an attachment 30, and a work drive device 40.

The lower travelling body 21 includes a pair of crawlers, and can travel on the ground as the pair of crawlers move. The upper slewing body 22 is slewably attached to the lower travelling body 21 with a slewing device 24 interposed between them. The slewing device 24 is a slewing drive device that slews the upper slewing body 22. The upper slewing body 22 includes a cab (operator's cab) 23 located at a front portion of the upper slewing body 22.

The attachment 30 is a work device, and is attached to the upper slewing body 22 so as to be able to perform work operation including rotation in a vertical direction. The attachment 30 includes a boom 31, an arm 32, and a bucket 33. The boom 31 has a base end portion attached to the upper slewing body 22 so as to be rotatable (capable of being raised and lowered) in the vertical direction and a tip portion on the opposite side. The arm 32 has a base end portion attached to the tip portion of the boom 31 so as to be rotatable in the vertical direction with respect to the boom 31, and a tip portion on the opposite side. The bucket 33 is attached to a tip portion of the arm 32 so as to be rotatable in a front rear direction with respect to the arm 32. The bucket 33 is a portion that performs work including excavation, leveling, scooping, and the like of soil and sand (transport object). Note that a transport object that is held by the bucket 33 is not limited to soil and sand, and may be a stone or a waste (industrial waste or the like).

The work drive device 40 hydraulically moves the attachment 30 to perform the work operation. In the present embodiment, the work drive device 40 includes a plurality of hydraulic cylinders, each of which is extendable and retractable, and a plurality of the cylinders include a boom cylinder 41, an arm cylinder 42, and a bucket cylinder 43.

The boom cylinder 41 rotates the boom 31 with respect to the upper slewing body 22. The boom cylinder 41 has a base end portion rotatably coupled to the upper slewing body 22 and a tip portion rotatably coupled to the boom 31.

The arm cylinder 42 rotates the arm 32 with respect to the boom 31. The arm cylinder 42 has a base end portion rotatably coupled to the boom 31 and a tip portion rotatably coupled to the arm 32.

The bucket cylinder 43 rotates the bucket 33 with respect to the arm 32. The bucket cylinder 43 has a base end portion rotatably coupled to the arm 32 and a tip portion rotatably coupled to a link member 34. The link member 34 is rotatably coupled to the bucket 33, and couples the bucket cylinder 43 and the bucket 33 to each other.

Further, the work machine 20 further includes a slewing angle sensor 52 that is a slewing angle detector and a work posture detector 60.

The slewing angle sensor 52 detects a slewing angle of the upper slewing body 22 with respect to the lower travelling body 21. The slewing angle sensor 52 is, for example, an encoder, a resolver, or a gyro sensor. In the present embodiment, a slewing angle of the upper slewing body 22 at the time when a front side of the upper slewing body 22 coincides with a front side of the lower travelling body 21 is 0°.

The work posture detector 60 detects a work posture of the attachment 30. The work posture detector 60 includes a boom inclination angle sensor 61, an arm inclination angle sensor 62, and a bucket inclination angle sensor 63.

The boom inclination angle sensor 61 is attached to the boom 31 and detects a posture of the boom 31. The boom inclination angle sensor 61 acquires an inclination angle of the boom 31 with respect to the horizontal line. The boom inclination angle sensor 61 is, for example, an inclination (acceleration) sensor. Note that the work posture detector 60 may include, instead of the boom inclination angle sensor 61, a rotation angle sensor that detects a rotation angle of a boom foot pin (boom base end) or a stroke sensor that detects a stroke amount of the boom cylinder 41.

The arm inclination angle sensor 62 is attached to the arm 32 to detect a posture of the arm 32. The arm inclination angle sensor 62 acquires an inclination angle of the arm 32 with respect to the horizontal line. The arm inclination angle sensor 62 is, for example, an inclination (acceleration) sensor. Note that the work posture detector 60 may include, instead of the arm inclination angle sensor 62, a rotation angle sensor that detects a rotation angle of an arm coupling pin (arm base end) or a stroke sensor that detects a stroke amount of the arm cylinder 42.

The bucket inclination angle sensor 63 is attached to the link member 34 to detect a posture of the bucket 33. The bucket inclination angle sensor 63 acquires an inclination angle of the bucket 33 with respect to the horizontal line. The bucket inclination angle sensor 63 is, for example, an inclination (acceleration) sensor. Note that the work posture detector 60 may include, instead of the bucket inclination angle sensor 63, a rotation angle sensor that detects a rotation angle of a bucket coupling pin (bucket base end) or a stroke sensor that detects a stroke amount of the bucket cylinder 43.

In the present embodiment, the work machine 20 performs a series of operations of excavating earth and sand and removing earth. A series of operations include excavation operation, lifting and slewing operation, earth removal operation, and returning slewing operation. The excavation operation is operation of excavating earth and sand with the bucket 33. The lifting and slewing operation is operation of slewing the upper slewing body 22 in a state of holding earth and sand. The earth removal operation is operation of removing earth and sand to a bed or the like of a dump truck. The returning slewing operation is operation of slewing the upper slewing body 22 to an excavation position after earth removal.

### (Circuit configuration of monitoring area setting system and work machine)

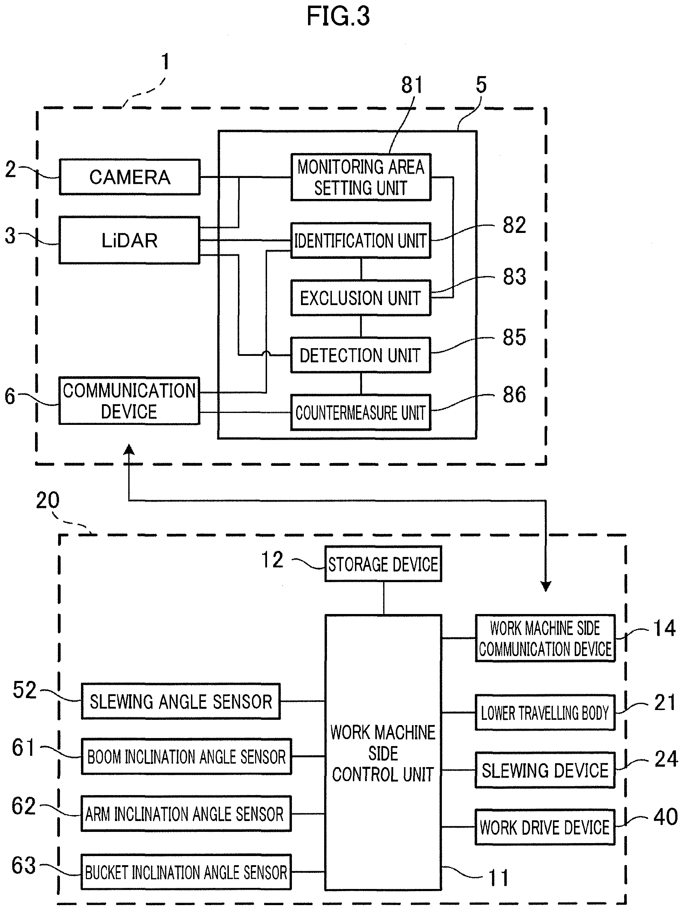

FIG. 3 is a circuit diagram of the monitoring area setting system 1 and the work machine 20. The work machine 20 includes a work machine side control unit 11, a storage device 12, and a work machine side communication device 14.

Information on a slewing angle (posture) of the upper slewing body 22 with respect to the lower travelling body 21 detected by the slewing angle sensor 52 is input to the work machine side control unit 11. Further, information on a posture of the boom 31 detected by the boom inclination angle sensor 61 is input to the work machine side control unit 11. Further, information on a posture of the arm 32 detected by the arm inclination angle sensor 62 is input to the work machine side control unit 11. Further, information on a posture of the bucket 33 detected by the bucket inclination angle sensor 63 is input to the work machine side control unit 11.

In a case where the work machine 20 is automatically operated, the work machine side control unit 11 automatically controls the work machine 20. The work machine side control unit 11 controls movement of the upper slewing body 22 and the attachment 30 so that the upper slewing body 22 and the attachment 30 perform the above described series of operations. Specifically, the work machine side control unit 11 causes the slewing device 24 and the attachment 30 to operate automatically based on a detection value of the slewing angle sensor 52 and the work posture detector 60.

In a case where the work machine 20 is automatically operated as described above, the storage device 12 stores the series of operations described above. Content of the series of operations is set by, for example, teaching by a worker and stored in the storage device 12.

The work machine side communication device 14 can communicate with a communication device 6 described later of the monitoring area setting system 1.

The monitoring area setting system 1 further includes a controller 5 and the communication device 6.

The communication device 6 can communicate with the work machine side communication device 14 of the work machine 20.

The controller 5 is a computer that performs input and output of a signal, calculation (processing), storage of information, and the like. For example, a function of the controller 5 is realized as an arithmetic unit executes a program stored in a storage unit of the controller 5. The controller 5 functions to include functional units of a monitoring area setting unit 81, an identification unit 82, an exclusion unit 83, a detection unit 85, and a countermeasure unit 86 as the arithmetic unit executes a program stored in the storage unit. These functional units do not have substance and correspond to units of functions executed by the program. That is, it can be said that control executed by these functional units is substantially integrally executed by the controller 5. Note that the functional units may be separately arranged in a plurality of controllers.

The monitoring area setting unit 81 sets the monitoring area 70. Specifically, the monitoring area setting unit 81 three dimensionally acquires a position of the work machine 20 by superimposing two dimensional coordinates of each point of point cloud data acquired by the LiDAR 3 on a two dimensional image captured by the camera 2. Then, the monitoring area setting unit 81 sets, around the work machine 20, the monitoring area 70 around the position of the work machine 20. That is, the monitoring area 70 is an area set to include the work machine 20 located within the detection range of the LiDAR 3, and corresponds to a reference monitoring area of the present invention. For this reason, the detection range of the LiDAR 3 is set to include the monitoring area 70. At this time, a plurality of pieces of the LiDAR 3 may be arranged so as to cover the monitoring area 70 by the detection range of each piece of the LiDAR 3.

Here, as illustrated in FIG. 1, the monitoring area 70 is set as an area obtained by adding a safety area around an excluded area 71 to be described later. The safety area is set in consideration of time required to stop the work machine 20. Note that the monitoring area 70 may be manually set.

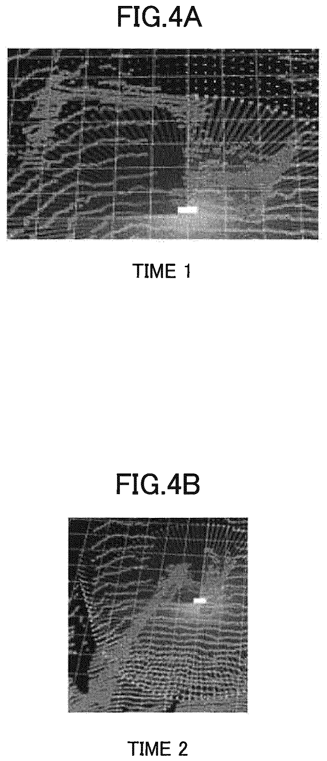

Returning to FIG. 3, the identification unit 82 identifies an operation range of the work machine 20 as the excluded area 71 based on point cloud data corresponding to the work machine 20 acquired by the LiDAR 3. The excluded area 71 is illustrated in FIG. 1. Further, FIGS. 4A and 4B are diagrams illustrating point cloud data. As illustrated in FIGS. 4A and 4B, the identification unit 82 acquires point cloud data corresponding to the work machine 20 at different times (Time 1, Time 2, ...) and takes a difference between them to identify an operation range of the work machine 20, and sets the operation range as the excluded area 71.

Returning to FIG. 3, the exclusion unit (excluding means) 83 excludes the excluded area 71 from the monitoring area 70. Since the excluded area 71 is excluded from the monitoring area 70, the monitoring area 70 becomes smaller than that before the excluded area 71 is excluded. Therefore, an amount of calculation required for monitoring can be reduced. An area in which the excluded area 71 is excluded from the monitoring area 70 corresponds to an actual monitoring area for the work machine 20 in the present invention.

The detection unit (detecting means) 85 detects intrusion of an object into the monitoring area 70 (actual monitoring area) based on point cloud data in the monitoring area 70 (actual monitoring area) after the excluded area 71 is excluded. The countermeasure unit 86 takes a predetermined countermeasure in a case of intrusion of an object into the monitoring area 70 after the excluded area 71 is excluded. Specifically, as the countermeasure, the countermeasure unit 86 restricts operation of the work machine 20 or generates an alarm from the alarm device 4. In a case where operation restriction of the work machine 20 is performed as a countermeasure, the countermeasure unit 86 transmits and inputs an operation restriction instruction to the work machine 20 via the communication device 6. When receiving the operation restriction instruction, the work machine side control unit 11 of the work machine 20 restricts or stops operation of the attachment 30 and the slewing device 24.

As the excluded area 71 is excluded from the monitoring area 70, the work machine 20 is not erroneously detected as an intruder. Therefore, an object detected in the monitoring area 70 is an intruder, and may contact or interfere with the work machine 20. In view of the above, in a case where an intruder is detected, a countermeasure such as restricting operation of the work machine 20 is taken, so that interference between the work machine 20 and the intruder can be prevented.

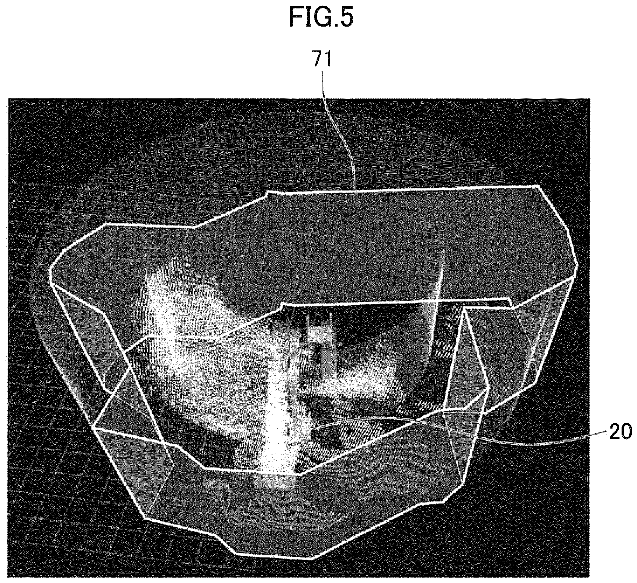

Here, the identification unit 82 identifies a range in which operation ranges of a series of operations in the work machine 20 are superimposed as the excluded area 71. Specifically, the identification unit 82 identifies, as the excluded area 71, a range in which operation ranges of the excavation operation, the lifting and slewing operation, the earth removal operation, and the returning slewing operation are superimposed. The identification unit 82 receives information on each operation of the work machine 20 from the work machine 20 via the communication device 6. FIG. 5 illustrates the excluded area 71. The excluded area 71 includes all operation ranges of the work machine 20 that performs the series of operations.

The exclusion unit 83 excludes the excluded area 71 from the monitoring area 70. By the above, an entire operation range of the work machine 20 that performs a series of operations is excluded from the monitoring area 70. Therefore, a range excluded from the monitoring area 70 is wider than that in a case where an operation range of only a part of a series of operations is excluded as the excluded area 71. As a result, an amount of calculation required for monitoring can be suitably reduced.

Further, the identification unit 82 identifies the excluded area 71 for each of a plurality of operations of the work machine 20. For example, it is possible to estimate what kind of operation the work machine 20 is currently performing based on content such as whether or not the work machine side control unit 11 of the work machine 20 is causing the lower travelling body 21 to travel, whether or not the work machine side control unit 11 is slewing the slewing device 24, and whether or not the work machine side control unit 11 is causing the attachment 30 to operate. The identification unit 82 acquires this information via the communication device 6 and identifies the excluded area 71 for each operation.

Then, the exclusion unit 83 switches (sets) the excluded area 71 to be excluded from the monitoring area 70 according to current operation of the work machine 20. For example, the excluded area 71 is switched between when the lower travelling body 21 is travelling and when the lower travelling body 21 is not travelling. By the above, the excluded area 71 having an appropriate size according to operation of the work machine 20 can be set.

The monitoring area setting unit 81 sets the monitoring area 70 according to current operation of the work machine 20. Specifically, the monitoring area setting unit 81 sets the monitoring area 70 (actual monitoring area) based on the excluded area 71 corresponding to current operation of the work machine 20. By the above, the monitoring area 70 having an appropriate size according to operation of the work machine 20 can be set.

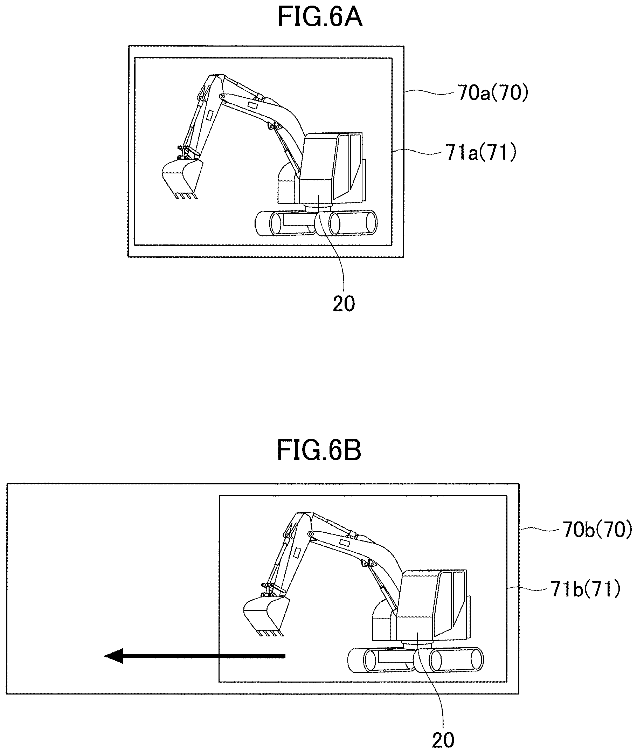

FIGS. 6A and 6B are diagrams illustrating the monitoring area 70 (actual monitoring area) and the excluded area 71 for each operation of the work machine 20. The excluded area 71 is switched between when the work machine 20 is not travelling (FIG. 6A) and when the work machine 20 is travelling (FIG. 6B). Then, an excluded area 71a of when the work machine 20 is not travelling is smaller than an excluded area 71b of when the work machine 20 is travelling. Therefore, even if the monitoring area 70a of when the work machine 20 is not travelling is made smaller than the monitoring area 70b of when the work machine 20 is travelling, a countermeasure against an intruder can be sufficiently taken. Then, by making the monitoring area 70 small, it is possible to suitably reduce an amount of calculation required for monitoring.

Here, in FIG. 6A, the monitoring area setting unit 81 minimizes a safety area added to the excluded area 71a on the upper, lower, left, and right side of the work machine 20, so that the monitoring area 70a is made small. On the other hand, in FIG. 6B, the monitoring area setting unit 81 widens the safety area added in a travelling direction (left side in the diagram) of the work machine 20 according to a travelling speed of the work machine 20, so that the monitoring area 70b is set to be wider than the monitoring area 70a.

As described above, according to the monitoring area setting system 1 according to the present embodiment, an operation range of the work machine 20 is identified as the excluded area 71, and the excluded area 71 is excluded from the monitoring area 70 as a reference monitoring area, so that an actual monitoring area is set. Since the excluded area 71 is excluded from the monitoring area 70, the monitoring area 70 becomes smaller than that before the excluded area 71 is excluded. Therefore, an amount of calculation required for monitoring can be reduced.

Further, intrusion of an object into the monitoring area 70 is detected based on point cloud data in the monitoring area 70 after the excluded area 71 is excluded. As the excluded area 71 is excluded from the monitoring area 70, the work machine 20 is not erroneously detected as an intruder. Therefore, an object detected in the monitoring area 70 is an intruder, and may interfere with the work machine 20. In view of the above, in a case where an intruder is detected, for example, a countermeasure such as restricting operation of the work machine 20 is taken, so that interference between the work machine 20 and the intruder can be prevented.

Further, a range in which operation ranges of a series of operations of the work machine 20 are superimposed is identified as the excluded area 71 and excluded from the monitoring area 70. By the above, an entire operation range of the work machine 20 that performs a series of operations is excluded from the monitoring area 70. Therefore, a range excluded from the monitoring area 70 is wider than that obtained as an operation range of only a part of a series of operations is excluded as the excluded area 71. As a result, an amount of calculation required for monitoring can be suitably reduced.

Further, the excluded area 71 is identified for each of a plurality of operations of the work machine 20, and the excluded area 71 excluded from the monitoring area 70 is switched according to current operation of the work machine 20. By the above, the excluded area 71 having an appropriate size according to operation of the work machine 20 can be set. As a result, the monitoring area 70 (actual monitoring area) having an appropriate size according to operation of the work machine 20 can be set. For example, the excluded area 71 is switched between when the work machine 20 is travelling and when the work machine 20 is not travelling. Then, the excluded area 71 of when the work machine 20 is not travelling is smaller than the excluded area 71 of when the work machine 20 is travelling. Therefore, even if the monitoring area 70 of when the work machine 20 is not travelling is made smaller than the monitoring area 70 of when the work machine 20 is travelling, a countermeasure against an intruder can be sufficiently taken. Then, by making the monitoring area 70 small, it is possible to suitably reduce an amount of calculation required for monitoring.

Although the embodiment of the present invention is described above, only specific example is described, and the present invention is not particularly limited to the embodiment. Therefore, a specific configuration and the like can be modified in design as appropriate. Further, the action and effect described in the embodiment of the present invention merely recite the most suitable action and effect resulting from the present invention, and the action and effect according to the present invention are not limited to those described in the embodiment described above.

The present invention provides a monitoring area setting system for a work machine. The monitoring area setting system includes a point cloud data acquisition unit and a controller. The point cloud data acquisition unit has a preset detection range, and acquires point cloud data that is data indicating a distance from a predetermined reference point to a target object within the detection range. The controller acquires information on a reference monitoring area that is an area set to include a work machine located within the detection range, identifies an operation range of the work machine as an excluded area based on the point cloud data, and sets an actual monitoring area for the work machine by excluding the excluded area from the reference monitoring area.

In the above configuration, the controller preferably detects intrusion of an object into the actual monitoring area based on the point cloud data in the actual monitoring area.

Further, in the above configuration, in a case where the work machine performs a series of operations including a plurality of operations, the controller preferably identifies a range in which the operation range of each of a plurality of the operations is superimposed as the excluded area.

In the above configuration, the controller is preferably capable of identifying a plurality of different ones of the excluded areas according to a plurality of different operations of the work machine, and preferably sets the excluded area according to current operation of the work machine.

In the above configuration, the controller preferably identifies a position of the work machine within the detection range, and sets the reference monitoring area according to a result of the identification to acquire information on the reference monitoring area. Note that a worker may manually set a reference monitoring area.

## Claims

1. monitoring area setting system comprising:
a point cloud data acquisition unit that has a preset detection range and acquires point cloud data that is data indicating a distance from a predetermined reference point to a target object within the detection range; and
a controller that acquires information on a reference monitoring area that is an area set to include a work machine located within the detection range, identifies an operation range of the work machine as an excluded area based on the point cloud data, and excludes the excluded area from the reference monitoring area to set an actual monitoring area for the work machine.

2. The monitoring area setting system according to claim 1, wherein the controller detects intrusion of an object into the actual monitoring area based on the point cloud data in the actual monitoring area.

3. The monitoring area setting system according to claim 1 or 2, wherein in a case where the work machine performs a series of operations including a plurality of operations, the controller identifies a range in which the operation range of each of the plurality of operations is superimposed as the excluded area.

4. The monitoring area setting system according to claim 1 or 2, wherein the controller is capable of identifying a plurality of different ones of the excluded areas according to a plurality of different operations of the work machine, and sets the excluded area according to current operation of the work machine.

5. The monitoring area setting system according to any one of claims 1 to 4, wherein the controller identifies a position of the work machine within the detection range, and sets the reference monitoring area according to a result of the identification to acquire information on the reference monitoring area.
